# EUROPEAN PATENT SPECIFICATION

(11) **EP 2 735 230 B1**
(45) Date of publication and mention of the grant of the patent: **21.09.2016**
(21) Application number: 14152585.7
(22) Date of filing: 11.01.2012
(51) Int. Cl.: A01N 37/02, A01N 31/02, A01N 25/28, A01P 19/00

(54) **Attractant composition containing ethyl 3-methylbutanoate and (E,E)-8-,10-dodecadien-1-ol**
Lockstoffzusammensetzung enthaltend Ethyl-3-methylbutanoat und (E,E)-8-,10-dodecadien-1-ol
Composition d'appàt contenant du 3-methylbutanoate d'éthyle et du (E,E)-8-,10-dodecadien-1-ol

(30) Priority: 14.01.2011 US 201161432608 P; 03.02.2011 EP 11153238
(43) Date of publication of application: 28.05.2014
(62) Divisional of application: 12700230.1
(73) Proprietor: BASF SE, 67056 Ludwigshafen am Rhein (DE)
(72) Inventor: Benlahmar, Ouidad, 68163 Mannheim (DE); Schröder-Grimonpont, Tina, 76751 Jockgrim (DE); Stracke, Joseph, 67259 Heuchelheim (DE); Hennessey, Tiffany, Wake Forest, NC 27587 (US); Klein, Clark D., Pittsboro, NC 27312 (US); Taranta, Claude, 76297 Stutensee (DE)
(74) Representative: BASF IP Association

(56) References cited:
- DE-A1- 19 945 846
- ZHIHUA YANG, MARIE BENGTSSON AND PETER WITZGALL: "Host Plant Volatiles Synergize Response to Sex Pheromone in Codling Moth, Cydia pomonella", JOURNAL OF CHEMICAL ECOLOGY, vol. 30, no. 3, 3 March 2004 (2004-03-03), pages 619-629, XP002648912, ISSN: 0098-0331, DOI: 10.1023/B:JOEC.0000018633.94002.af
- FEDERICA TRONA, GIANFRANCO ANFORA, MARIE BENGTSSON, PETER WITZGALL AND RICKARD IGNELL: "Coding and interaction of sex pheromone and plant volatile signals in the antennal lobe of the codling moth Cydia pomonella", THE JOURNAL OF EXPERIMENTAL BIOLOGY, vol. 213, 15 December 2010 (2010-12-15), pages 4291-4303, XP002648913, ISSN: 0022-0949, DOI: 10.1242/jeb.047365

## Description

The present invention relates to a composition for controlling undesired insect infestation comprising a pheromone, and ethyl 3-methylbutanoate, wherein the pheromone comprises (E,E)-8,10-dodecadien-1-ol (codlemone); microcapsules comprising a capsule core, which contains said composition, and a capsule wall, which contains in polymerized form 30 to 90% by weight of one or more C₁-C₂₄-alkyl esters of acrylic acid and/or methacrylic acid, acrylic acid, methacrylic acid and/or maleic acid (monomers I), 10 to 70% by weight of one or more difunctional and/or polyfunctional monomers (monomers II), and 0 to 40% by weight of one or more other monomers (monomer III), in each case based on the total weight of the monomers; a method for the preparation of said composition, wherein the ethyl 3-methylbutanoate and the (E,E)-8,10-dodecadien-1-ol are mixed; a process for the preparation of said microcapsules, which comprises preparing an oil-in-water emulsion from monomers, free-radical initiator, protective colloid, the pheromone comprising (E,E)-8,10-dodecadien-1-ol, and ethyl 3-methylbutanoate, and triggering the polymerization of the monomers by heating; and a method for controlling undesired insect infestation wherein said composition, or said microcapsules are allowed to act on the habitat of the insects in question, or the plants to be protected from the insects in question. Combinations of preferred embodiments with other preferred embodiments are within the scope of the present invention.

Insect pests, particularly insect s of the order *Lepidoptera,* such as codling moth, are responsible for substantial losses of crops. Various methods use microcapsules, which contain pheromones to control such undesired insects.

WO 00/48465 discloses microcapsules comprising a capsule core, which contains a pheromone and a diluent, and a capsule shell. For example, a microcapsule was disclosed comprising codling moth pheromone and Miglyol 812 in the capsule core, wherein the capsule wall was formed by an ethylene-maleic acid copolymer.
WO 98/44912 discloses microcapsules containing a pheromone and a shell wall made of polyurea, polyurethane, melamine/urea or gelatin.
WO 98/45036 discloses microcapsules containing a pheromone (e.g. (E,E)-8,10-dodecadien-1-ol) encapsulated within polyurea or polyurea/polyurethane shell.
EP 0141584 discloses microcapsules comprising a core of pheromones (e.g. codlure) and a permeable polymer, which is for example a polymethylmethacrylate or polyacrylate. DE19945846 describes the use of carbonic acid esters as attractants for application in the control of female codling moth, as well as compositions and devices containing these attractants.

Zhihua Y., Bengtsson M., and Withgall P. (Host Plant Volatiles Synergize Response to Sex Pheromone in Codling Moth, Cydia pomonella, Journal of Chemical Ecology, vol.30, no.3, 2004, pages 619-629) describe plant volatile compounds that synergize attraction of codling moth males to the sex pheromone (E,E)-8,10-dodecadien-1-ol (codlemone).

Trona F., Anfora G., and Bengtsson M. (Coding and interaction of sex pheromone and plant volatile signals in the antennal lobe of the codling moth Cydia pomonella, The Journal of Experimental Biology, vol.213, 2010, pages 4291-4303) describe plant volatiles that attract codling moths and synergize the codling moth male response to the female-produced sex pheromone.

Disadvantages of the state of the art are that it often requires the handling of highly toxic isocyanate monomers for synthesis of the shell wall, that residual isocyanates may be contained in the final product, that the capsules are not tight and the pheromone evaporates very fast, that pure pheromone is encapsulated, which is very expensive; or that it is not possible to adjust the release rates carefully.

Object of the invention was to overcome said disadvantages of the state of the art.

The invention relates to a composition for controlling undesired insect infestation comprising a pheromone and ethyl 3-methylbutanoate, wherein the pheromone comprises (E,E)-8,10-dodecadien-1-ol.

The composition may be formulated in in microcapsules comprising a capsule core, which contains the pheromone, wherein the pheromone comprises (E,E)-8,10-dodecadien-1-ol, and a capsule wall, which contains in polymerized form
30 to 90% by weight of one or more C₁C₂₄-alkyl esters of acrylic acid and/or methacrylic acid, acrylic acid, methacrylic acid and/or maleic acid (monomers I),
10 to 70% by weight of one or more difunctional and/or polyfunctional monomers (monomers II), and
0 to 40% by weight of one or more other monomers (monomer III),
in each case based on the total weight of the monomers.

The polymerization of said monomers usually results in a poly(meth)acrylate. Poly(meth)-acrylate is a known encapsulation material, for example from WO 2008/071649, EP 0 457154 or DE 10 2007 055 813.
The poly(meth)acrylate of the **capsule wall** comprises at least 30%, in a preferred form at least 40%, in a particularly preferred form at least 50%, more particularly at least 60%, with very particular preference at least 70%, but not more than 90%, more particularly not more than 85%, and, with very particular preference, not more than 80%, by weight, of at least one monomer from the group comprising C₁-C₂₄ alkyl esters of acrylic and/or methacrylic acid, acrylic acid, methacrylic acid, and maleic acid **(monomers I),** in co-polymerized form, based on the total weight of the monomers.

Furthermore the poly(meth)acrylate of the capsule wall comprises at least 10%, preferably at least 15%, preferentially at least 20%, but not more than 70%, preferably not more than 60%, and with particular preference not more than 50%, by weight, of one or more difunctional or polyfunctional monomers **(monomers II),** in copolymerized form, based on the total weight of the monomers. In another preferred embodiment, the poly(meth)acrylate of the capsule wall comprises preferably at least 10%, preferably at least 15%, and also, in general, not more than 50%, preferably not more than 40% by weight, of one or more polyfunctional monomers (monomers II), in copolymerized form, based on the total weight of the monomers.

Additionally, the poly(meth)acrylate may comprise up to 40%, preferably up to 30%, more particularly up to 20%, by weight, of other **monomers III,** in copolymerized form. The capsule wall is preferably synthesized only from monomers of groups I and II.

Suitable **monomers** I are C₁-C₂₄ alkyl esters of acrylic and/or methacrylic acid and also acrylic acid, methacrylic acid, and also maleic acid. Suitable monomers I are isopropyl, isobutyl, sec-butyl, and tert-butyl acrylates and the corresponding methacrylates, and also, with particular preference, methyl, ethyl, n-propyl, and n-butyl acrylates and the corresponding methacrylates. In general the methacrylates and methacrylic acid are preferred.

According to one preferred embodiment the microcapsule walls comprise 25% to 75% by weight of maleic acid, methacrylic acid and/or acrylic acid, more particularly methacrylic acid, based on the total amount of the monomers I, in copolymerized form.

Suitable **monomers II** are difunctional and/or polyfunctional monomers. By difunctional or by polyfunctional monomers are usually meant compounds which have at least two nonconjugated ethylenic double bonds. Contemplated primarily are divinyl monomers and polyvinyl monomers. They bring about crosslinking of the capsule wall during the polymerization. In another preferred embodiment, monomer II comprises one or more difunctional and polyfunctional monomers.

Suitable **divinyl monomers** are divinylbenzene and divinylcyclohexane. Preferred divinyl monomers are the diesters of diols with acrylic acid or methacrylic acid, and also the diallyl and divinyl ethers of these diols. Mention may be made, by way of example, of ethanediol diacrylate, ethylene glycol dimethacrylate, 1,3-butylene glycol dimethacrylate, methallylmethacrylamide, allyl acrylate, and allyl methacrylate. Particular preference is given to propanediol, 1,4-butanediol, pentanediol, and hexanediol diacrylates and the corresponding methacrylates.

Preferred **polyvinyl monomers** are the polyesters of polyols with acrylic acid and/or methacrylic acid, and also the polyallyl and polyvinyl ethers of these polyols, and also trivinylbenzene and trivinylcyclohexane. Particular preference is given to trimethylolpropane triacrylate and trimethacrylate, pentaerythritol triallyl ether, pentaerythritol tetraallyl ether, pentaerythritol triacrylate, and pentaerythritol tetraacrylate, and also their technical mixtures.

**Monomers III** contemplated are other monomers, typically different than the mononers I and II, such as vinyl acetate, vinyl propionate, vinylpyridine, and styrene or α-methylstyrene. Particular preference is given to itaconic acid, vinylphosphonic acid, maleic anhydride, 2-hydroxyethyl acrylate and methacrylate, acrylamido-2-methylpropanesulfonic acid, methacrylonitrile, acrylonitrile, methacrylamide, N-vinylpyrrolidone, N-methylolacrylamide, N-methylolmethacrylamide, dimethylaminoethyl methacrylate, and diethylaminoethyl methacrylate.

The **average particle size** of the microcapsules (z-average by means of light scattering; preferably a D_{4,3} average) is usually 0.5 to 50 µm, preferably 0.5 to 8 µm, more preferably 1 to 5 µm, and especially 1 to 3 µm.

The microcapsules according to the invention may comprise from 1 to 50 wt%, preferably from 5 to 40 wt% in particular from 10 to 30 wt% **capsule shell,** based on the total weight of the microcapsules. For calculating the weight of the capsule shell, the amounts of monomers I, II and III are added.
The present invention further relates to a **process for the preparation of the microcapsules** according to the invention, which comprises preparing an oil-in-water emulsion from monomers, free-radical initiator, protective colloid, etyhl 3-methylbutanoate, and the pheromone to be encapsulated comprising (E,E)-8,10-dodecadien-1-ol, and triggering the polymerization of the monomers by heating. The preparation process of the microcapsules is what is called an *in situ* polymerization. The principle of microcapsule formation is based on the preparation of a stable oil-in-water emulsion from the monomers, a free-radical initiator, the protective colloid, ethyl 3-methylbutanoate, and the pheromone to be encapsulated comprising (E,E)-8,10-dodecadien-1-ol. Subsequently the polymerization of the monomers is triggered by heating and is controlled, if appropriate, by further increase in temperature, the resulting polymers forming the capsule wall which encloses the pheromone comprising (E,E)-8,10-dodecadien-1-ol. This general principle is described, for example, in DE A 101 39 171. Usually, the oil-in-water emulsion contains from 0,3 to 15 wt%, preferably form 1,0 to 10 wt%, and in particular from 2,0 to 8,0 wt% protective colloid, based on the total weight of the emulsion.

The **protective colloid** is generally incorporated into the capsule wall and is therefore likewise a constituent of the capsule wall. Generally speaking, the surface of the polymer has the protective colloid. Thus it is possible for there to be up to 10% by weight, based on the total weight of the microcapsules, of protective colloid.

**Pheromones** are well known chemical compounds used for controlling undesired insects. For example, Metcalf, R. L. Ullmann's Encyclopedia of Industrial Chemistry 2000, keyword "Insect Control", lists in chapter 15.1 (Sex pheromone attractants) and chapter 15.2 (Aggregation pheromones" suitable examples, wherein the pheromones for *Lepidoptera* in Table 4 are highly suitable.

Examples of pheromones include volatile alkanols and alkenols having from 5 to 18 carbon atoms, volatile alkanals and alkenals having from 5 to 18 carbon atoms, alkanones having from 6 to 18 carbon atoms, 1,7-dioxaspirononan and 3- or 4-hydroxy-1,7-dioxaspiroundecan, benzyl alcohol, Z-(9)-tricosene (muscalure), heneicosene, diacetyl, alcanoic acids having from 5 to 16 carbon atoms such as caprylic acid, laurylic acid, α-pinen, methyleugenol, ethyldodecanoate, tert-butyl 4-(or 5-)chloro-2-ethylcyclohexane-carboxylate, mycrenone, cucurbitacin, trimedlure (commercially available as Capilure®), and (E,E)-8,10-dodecadien-1-ol (codlemone).

Further examples of known pheromones are: Z-5-Decenyl acetate, dodecanyl acetate, Z-7-dodecenyl acetate, E-7-dodecenyl acetate, Z-8-dodecenyl acetate, E-8-dodecenyl acetate, Z-9-dodecenyl acetate, E-9-dodecenyl acetate, E-10-dodecenyl acetate, 11-dodecenyl acetate, Z-9,11-dodecadienyl acetate, E-9,11-dodecadienyl acetate, Z-11-tridecenyl acetate, E-11-tridecenyl acetate, tetradecenyl acetate, E-7-tetradecenyl acetate, Z-8-tetradecenyl acetate, E-8-tetradacenyl acetate, Z-9-tetradecenyl acetate, E-9-tetradecenyl acetate, Z-10-tetradecenyl acetate, E-10-tetradecenyl acetate, Z-11-tetradecenyl acetate, E-11-tetradecenyl acetate, Z-12-pentadecenyl acetate, E-12-pentadecenyl acetate, hexadecanyl acetate, Z-7-hexadecenyl acetate, Z-11-hexadecenyl acetate, E-11-hexadecenyl acetate, octadecanyl acetate, E,Z-7,9-dodecadienyl acetate, Z,E-7,9-dodecadienyl acetate, E,E-7,9-dodecadienyl acetate, Z,Z-7,9-dodecadienyl acetate, E,E-8,10-dodecadienyl acetate, E,Z-9,12-dodecadienyl acetate, E,Z-4,7-tri-decadienyl acetate, 4-methoxy-cinnamaldehyde, [beta]-ionone, estragol, eugenol, indole, 8-methyl-2-decyl propanoate, E,E-9,11-tetradecadienyl acetate, Z,Z-9,12-tetradecadienyl acetate, Z,Z-7,11-hexadecadienyl acetate, E,Z-7,11-hexadecadienyl acetate, Z,E-7,11-hexadecadienyl acetate, E,E-7,11-hexadecadienyl acetate, Z,E-3,13-octadecadienyl acetate, E,Z-3,13-octadecadienyl acetate, E,E-3,13-octadecadienyl acetate, hexanol, heptanol, octanol, decanol, Z-6-nonenol, E-6-nonenol, dodecanol, 11-dodecenol, Z-7-dodecenol, E-7-dodecenol, Z-8-dodecenol, E-8-dodecenol, E-9-dodecenol, Z-9-dodecenol, E-9,11-dodecadienol, Z-9,11-dodecadienol, Z,E-5,7-dodecadienol, E,E-5,7-dodecadienol, E,E-8,10-dodecadienol, E,Z-8,10-dodecadienol, Z,Z-8,10-dodecadienol, Z,E-8,10-dodecadienol, E,Z-7,9-dodecadienol, Z,Z-7,9-dodecadienol, E-5-tetradecenol, Z-8-tetradecenol, Z-9-tetradecenol, E-9-tetradecenol, Z-10-tetradecenol, Z-11-tetradecenol, E-11-tetradecenol, Z-11-hexadecenol, Z,E-9,11-tetradecadienol, Z,E-9,12-tetradecadienol, Z,Z-9,12-tetradecadienol, Z,Z-10,12-tetradecadienol, Z,Z-7,11-hexadecadienol, Z,E-7,11-hexadecadienol, (E)-14-methyl-8-hexadecen-1-ol, (Z)-14-methyl-8-hexadecen-1-ol, E,E-10,12-hexadecadienol, E,Z-10,12-hexadecadienol, dodecanal, Z-9-dodecenal, tetradecanal, Z-7-tetradecenal, Z-9-tetradecenal, Z-11-tetradecenal, E-11-tetradecenal, E-11,13-tetradecadienal, E,E-8,10-tetradecadienal, Z,E-9,11-tetradecadienal, Z,E-9,12-tetradecadienal, hexadecanal, Z-8-hexadecenal, Z-9-hexadecenal, Z-10-hexadecenal, E-10-hexadecenal, Z-11-hexadecenal, E-11-hexadecenal, Z-12-hexadecenal, Z-13-hexadecenal, (Z)-14-methyl-8-hexadecenal, (E)-14-methyl-8-hexadecenal, Z,Z-7,11-hexadecadienal, Z,E-7,11-hexadecadienal, Z,E-9,11-hexadecadienal, E,E-10,12-hexadecadienal, E,Z-10,12-hexadecadienal, Z,E-10,12-hexadecadienal, Z,Z-10,12-hexadecadienal, Z,Z-11,13-hexadecadienal, octadecanal, Z-11-octadecenal, E-13-octadecenal, Z-13-octadecenal, Z-5-decenyl-3-methyl butanoate disparlure: (+) cis-7,8-epoxy-2-methyloctadecane, seudenol: 3-methyl-2-cyclohexen-1-ol, sulcatol: 6-methyl-5-hepten-2-ol, ipsenol: 2-methyl-6-methylene-7-octen-4-ol, ipsdienol: 2-methyl-6-methylene-2,7-octadien-4-ol, grandlure I: cis-2-isopropenyl-1-methylcyclobutane-ethanol, grandlure II: Z-3,3-dimethyl-1-cyclohexane-ethanol, grandlure III: Z-3,3-dimethyl-1-cyclohexane-acetalde-hyde, grandlure IV: E-3,3-dimethyl-1-cyclohexane-acetaldehyde, cis-2-ver-benol: cis-4,6,6-trimethylbicyclo[3,1,1]hept-3-en-2-ol cucurbitacin, 2-methyl-3-buten-2-ol, 4-methyl-3-heptanol, cucurbitacin, 2-methyl-3-buten-2-ol, 4-methyl-3-heptanol, [alpha]-pinene: 2,6,6-trimethylbicyclo[3,1,1]hepten-2-ene, [alpha]-caryophyllene: 4,11,11-trimethyl-8-methylene-bicyclo[7,2,0]undecane, Z-9-tricosene, ([alpha]-multistriatin, 2-(2-endo,4-endo)-5-ethyl-2,4-dimethyl-6,8-dioxabicyclo[3,2,1]octane, methyleugenol: 1,2-dimethoxy-4-(2-propenyl)phenol, lineatin: 3,3,7-trimethyl-2,9-dioxatricyclo[3,3,1,0]nonane, chalcogran: 2-ethyl-1,6-dioxaspiro[4,4]nonane, frontalin: 1,5-dimethyl-6,8-dioxabicyclo[3,2,1]octane, endo-brevicomin: endo-7-ethyl-5-methyl-6,8-dioxabicyclo[3,2,1]octane, exo-brevicomin: exo-7-ethyl-5-methyl-6,8-dioxabicyclo[3,2,1]octane, (Z)-5-(1-decenyl)dihydro-2-(3H)-furanone, farnesol: 3,7,11-trimethyl-2,6,10-dodecatrien-1-ol, nerolidol 3,7-11-trimethyl-1,6,10-dodecatrien-3-ol, 3-methyl,6-(1-methylethenyl)-9-decen-1-ol acetate, (Z)-3-methyl-6-(1-methylethenyl)-3,9-decadien-1-ol acetate, (E)-3,9-methyl-6-(1-methyl-ethenyl)-5,8-decadien-1-ol acetate, 3-methylene-7-methyl-octen-1-ol propionate, (Z)-3,7-dimethyl-2,7-octadien-1-ol propionate, (Z)-3,9-dimethyl-6-(1-methyl-ethenyl)-3,9-decadlien-1-ol propionate.

Preferred pheromones are Z-9-dodecenyl acetate (commercially available as RAK® 1 from BASF SE), (E7,Z9)-dodecadienly acetate (commercially available as RAK® 2 from BASF SE), (E,E)-8,10-dodecadien-1-ol (commercially available as RAK® 3 from BASF SE) and Z-8-dodecenyl acetate.

The pheromone comprises(E,E)-8,10-dodecadien-1-ol, which is also known as **codlemone** or codlure, and commercially available (e.g. as CheckMate® CM-F from Suterra LLC, USA, Isomate®-C Plus from Pacific Biocontrol Corp. USA; RAK® 3 from BASF SE). Codlemone may be used in pure form, in technical quality or mixed with other pheromones.

The pheromone may have a **solubility** in water of up to 5000 g/l at 20 °C, preferably of up to 1000 mg/l and especially of up to 100 mg/l.

The pheromone may be present in the capsule core in dissolved, dispersed, or solid form. Preferably, the pheromone is present in dissolved form in the capsule core.
Due to its high costs, it is preferred that the core comprises up to 30 wt%, especially up to 20 wt% and in particular up to 10 wt% pheromone. The total weight of the capsule core may be calculated by adding the amounts of pheromone, water-immiscible organic solvent, and attractant.

Typically, the capsule core contains a **water-immiscible organic solvent.** The solubility in water of said solvent is usually up to 10 g/l at 20 °C, preferably up to 3 g/l and in particular up to 0,5 g/l.

The capsule core may comprise up to 60 wt%, preferably up to 45 wt% water-immiscible organic solvent (such as fatty acid glycerides). In particular, the capsule core comprises from 10 to 50 wt%, especially from 20 to 40 wt% water-immiscible organic solvent.

Examples for suitable organic solvents are mineral oil fractions of medium to high boiling point, such as kerosene or diesel oil, furthermore coal tar oils and oils of vegetable or animal origin, fatty acid glycerides, aliphatic, cyclic and aromatic hydrocarbons, e. g. toluene, xylene, paraffin, tetrahydronaphthalene, alkylated naphthalenes or their derivatives. Mixtures of organic solvents may also be used. Preferred organic solvents are a fatty acid glycerides and/or hydrocarbons. In particular fatty acid glycerides are preferred.
Suitable **fatty acid glycerides** are oils such as corn oil, soybean oil, canola oil, peanut oil, olive oil, palm oil, coconut oil, cottonseed oil, and sunflower oil. Mixtures of these oils as well as refined or purified oils obtained therefrom can also be used. Such oils refined for specific food, or pharmaceutical applications may be classified as oils rich in short-, medium, -or long-chained fatty acids. Fats with low melting point produced by varying the degree of hydrogenation of the aforementioned oils, or isolated by selective crystallization from various plant oils can also be used. Oils derived from an animal source such as butterfat oil, and low melting point fats from animals such as butterfat and lard can be used as well, although some animal oils may require additional stability control. Natural waxes like carnauba wax (a plant wax), candellila wax (a plant wax) can also be used. Mixture of these various oils, hydrogenated oils, and waxes derived from various plant or animal source can also be used.
Preferred **fatty acid glycerides** are C₆-C₁₄ fatty acid glycerides, preferably C₈-C₁₂ fatty acid glycerides and in particular C₈-C₁₀ fatty acid glycerides. These fatty acid glycerides usually contain at least 80 wt% of the fatty acids with aforementioned chain lengths. The fatty acids are preferably saturated. They are preferably triglycerides. Most preferred is caprylic/capric acid triglyceride, which is for example commercially available as Myritol® 312 from Cognis, Germany, Miglyol® 810 or Miglyol® 812 from Sasol, Germany.

The capsule core contains an attractant comprising ethyl-3-methylbutanoate. Attractants are non-pesticidal materials which may act in one or several of the following ways: a) entice the insect to approach the composition or the material treated with the composition; b) entice the insect to touch the composition or the material treated with the composition; c) entice the insect to consume the composition or the material treated with the composition; and d) entice the insect to return to the composition or the material treated with the composition. Suitable attractants include non-food attractants and food **attractants,** also termed as feeding stimulants.
Suitable non-food attractants are usually volatile material. The volatile attractants act as a lure and their type will depend on the pest to be controlled in a known manner. Non-food attractants include for example **flavors** of natural or synthetic origin. Suitable flavors include meat flavor, yeast flavor, seafood flavor, milk flavor, butter flavor, cheese flavor, onion flavor, and fruit flavors such as flavors of apple, apricot, banana, blackberry, cherry, currant, gooseberry, grape, grapefruit, raspberry and strawberry.
Suitable **food attractants** include:
- proteins, including animal proteins and plant proteins, e. g. in the form meat meal, fish meal, fish extracts, seafood, seafood extracts, or blood meal, insect parts, crickets powder, yeast extracts, egg yolk, protein hydrolysates, yeast autolysates, gluten hydrolysates, and the like;
- carbohydrates and hydrogenated carbohydrates, in particular mono- and disaccharides such glucose, arabinose, fructose, mannose, sucrose, lactose, galactose, maltose, maltotriose, maltotetrose, maltopentose or mixtures thereof such as molasses, corn syrup, maple syrup, invert sugars, and honey; polysaccharides including starch such as potato starch, corn starch, and starch based materials such as cereal powders (e.g. wheat powder, maize powder, malt powder, rice powder, rice bran), pectines, and glycerol, hydrogenated monoand oligosaccharides (sugar alcohols) such as xylitol, sorbitol, mannitol, isomaltolose, trehalose and maltitol as well as maltitol containing syrups;

Preferred additional attractants are methyl salicylate, amyl acetate, limonene or fruit extracts (e.g. apple extracts made from dried and extracted apples, comprises fructose, glucose, sorbitol, and the flavor of apples). The solubility in water of the attractants is usually up to 50 g/l at 20 °C, preferably up to 10 g/l, and in particular up to 1 g/l. This helps to ensure that the attractant is encapsulated. Usually, the **weight ratio of pheromone** comprising (E,E)-8,10-dodecadien-1-ol to ethyl 3-methylbutanoat is in the range from 1 / 99 to 40 / 60, preferably from 3 / 98 to 30 / 70, and in particular from 5 / 95 to 20 / 80.

In a preferred embodiment, the capsule core comprises
1 to 20 wt% pheromone comprising (E,E)-8,10-dodecadien-1-ol,
5 to 60 wt% water-immiscible organic solvent (e.g. fatty acid glycerides), and
35 to 85 wt% ethyl 3-methylbutanoate.
wherein the components add up to 100 wt%.
In an especially preferred embodiment, the capsule core comprises
3 to 10 wt% pheromone comprising (E,E)-8,10-dodecadien-1-ol,
15 to 45 wt% water-immiscible organic solvent, and
45 to 75 wt% ethyl 3-methylbutanoat,
wherein the components add up to 100 wt%.

The invention relates to a **composition** for controlling undesired insect infestation comprising a **pheromone** containing (E,E)-8,10-dodecadien-1-ol **and ethyl 3-methylbutanoate.** Suitable further pheromones are listed above. The pheromone comprises (E,E)-8,10-dodecadien-1-ol. Suitable insects are preferably codling moths. The composition may be any type of known agrochemical formulation, such as those which are usually used for insect control. The weight ratio of (E,E)-8,10-dodecadien-1-ol to ethyl 3-methylbutanoate is usually in the range from 1 : 1 to 1 : 100,000, preferably from 1:10 to 1:10,000, and in particular from 1 : 30 to 1 : 5,000.
The invention further relates to a method for the preparation of the composition comprising the pheromone containing (E,E)-8,10-dodecadien-1-ol and ethyl 3-methylbutanoate, wherein the ethyl 3-methylbutanoate and the (E,E)-8,10-dodecadien-1-ol are mixed. The mixing may be done by conventional means.

The invention further relates to a method for controlling undesired insect infestation, wherein the composition comprising the pheromone containing (E,E)-8,10-dodecadien-1-ol, and ethyl 3-methylbutanoate is allowed to act on the habitat of the insects in question, or the plants to be protected from the insects in question.
The method for controlling undesired insect infestation according to the present invention is usually not applied for therapeutic purposes. The method for controlling undesired insect infestation, wherein the composition comprising the pheromone containing (E,E)-8,10-dodecadien-1-ol and ethyl 3-methylbutanoate is allowed to act on the habitat of the insects in question, or the plants to be protected from the insects in question, is usually non-therapeutical.
The composition comprising a pheromone and ethyl 3-methylbutanoate, wherein the pheromone comprises (E,E)-8,10-dodecadien-1-ol, or the microcapsules containing the composition in the capsule coremay be formulated in an **agrochemical composition.** Examples for composition types are suspensions (SC, OD, FS), emulsifiable concentrates (EC), emulsions (EW, EO, ES), pastes, pastilles, wettable powders or dusts (WP, SP, SS, WS, DP, DS) or granules (GR, FG, GG, MG), which can be water-soluble or wettable, as well as gel formulations.

The agrochemical compositions may comprise **auxiliaries** which are customary in agrochemical compositions. The auxiliaries used depend on the particular application form and active substance, respectively. Examples for suitable auxiliaries are solvents, solid carriers, dispersants or emulsifiers (such as further solubilizers, protective colloids, surfactants and adhesion agents), organic and anorganic thickeners, bactericides, anti-freezing agents or anti-foaming agents.

Suitable **solvents** are water, organic solvents such as mineral oil fractions of medium to high boiling point, such as kerosene or diesel oil, furthermore coal tar oils and oils of vegetable or animal origin, aliphatic, cyclic and aromatic hydrocarbons, e. g. toluene, xylene, paraffin, tetrahydronaphthalene, alkylated naphthalenes or their derivatives, alcohols such as methanol, ethanol, propanol, butanol and cyclohexanol, glycols, ketones such as cyclohexanone and gamma-butyrolactone, fatty acid dimethylamides, fatty acids and fatty acid esters and strongly polar solvents, e. g. amines such as N-methylpyrrolidone. Preferred solvent is water.

Suitable **surfactants** (adjuvants, wetters, tackifiers, dispersants or emulsifiers) are alkali metal, alkaline earth metal, and ammonium salts of aromatic sulfonic acids, such as ligninsulfonic acid (Borresperse^{®} types, Borregard, Norway) phenolsulfonic acid, naphthalenesulfonic acid (Morwet^{®} types, Akzo Nobel, U.S.A.), dibutylnaphthalene-sulfonic acid (Nekal^{®} types, BASF, Germany), and fatty acids, alkylsulfonates, alkylarylsulfonates, alkyl sulfates, laurylether sulfates, fatty alcohol sulfates, and sulfated hexa-, hepta- and octadecanolates, sulfated fatty alcohol glycol ethers, furthermore condensates of naphthalene or of naphthalenesulfonic acid with phenol and formaldehyde, polyoxy-ethylene octylphenyl ether, ethoxylated isooctylphenol, octylphenol, nonylphenol, alkylphenyl polyglycol ethers, tributylphenyl polyglycol ether, tristearyl-phenyl polyglycol ether, alkylaryl polyether alcohols, alcohol and fatty alcohol/ethylene oxide condensates, ethoxylated castor oil, polyoxyethylene alkyl ethers, ethoxylated polyoxypropylene, lauryl alcohol polyglycol ether acetal, sorbitol esters, lignin-sulfite waste liquors, and proteins, denatured proteins, polysaccharides (e. g. methylcellulose), hydrophobically modified starches, polyvinyl alcohols (Mowiol^{®} types, Clariant, Switzerland), polycarboxylates (Sokolan^{®} types, BASF, Germany), polyalkoxylates, polyvinylamines (Lupasol^{®} types, BASF, Germany), polyvinylpyrrolidone, and the copolymers therof.
Examples for **thickeners** (i. e. compounds that impart a modified flowability to compositions, i. e. high viscosity under static conditions and low viscosity during agitation) are polysaccharides, and organic and anorganic clays, such as Xanthan gum (Kelzan^{®}, CP Kelco, U.S.A.), Rhodopol^{®} 23 (Rhodia, France), Veegum^{®} (R.T. Vanderbilt, U.S.A.), or Attaclay^{®} (Engelhard Corp., NJ, USA). **Bactericides** may be added for preservation and stabilization of the composition. Examples for suitable bactericides are those based on dichlorophene and benzylalcohol hemi formal (Proxel^{®} from ICI or Acticide^{®} RS from Thor Chemie and Kathon^{®} MK from Rohm & Haas) and isothiazolinone derivatives, such as alkylisothiazolinones, and benzisothiazolinones (Acticide^{®}
MBS from Thor Chemie). Examples for suitable **anti-freezing** agents are ethylene glycol, propylene glycol, urea and glycerin. Examples for **anti-foaming** agents are silicone emulsions (such as e. g. Silikon^{®} SRE, Wacker, Germany or Rhodorsil^{®}, Rhodia, France), long chain alcohols, fatty acids, salts of fatty acids, fluoroorganic compounds, and mixtures thereof.
Various types of oils, wetters, adjuvants, herbicides, bactericides, and/or other pesticides may be added to the pesticide or the compositions comprising them, if appropriate not until immediately prior to use **(tank mix).** These agents can be admixed with the microcapsules in a weight ratio of 1:100 to 100:1, preferably 1:10 to 10:1. Adjuvants which can be used are in particular polyether modified polysiloxanes such as Break Thru® S 240; fatty alcohol alkoxylates such as Plurafac® LF 120 (BASF) and Lutensol® ON 30 (BASF); EO/PO block polymers, e. g. Pluronic® RPE 2035 and Genapol B alcohol ethoxylates such as Lutensol XP 80^{®}; dioctyl sulfosuccinate sodium such as Leophen RA^{®}, polyvinylalcohols, such as Plurafac® LF 240 (BASF). Especially preferred adjuvants are fatty alcohol alkoxylates and polyether modified polysiloxanes.

The treatment of crop with the microcapsules according to the invention be done by applying said microcapsules by
ground or aerial application, preferably by ground application. Suitable application devices are a predosage device, a knapsack sprayer, a spray tank or a spray plane. Preferably the treatment is done by ground application, for example by a predosage device, a knapsack sprayer or a spray tank. The ground application may be done by a user walking through the crop field or with a motor vehicle. Usually, 0,5 to 500 liters of the ready-to-use spray liquor are applied per hectare of agricultural useful area, preferably 0,5 to 200 liters, more preferably 0,5 to 30 liters, and in particular 1 to 10 liters. Typically, the microcapsules are applied at a rate of 0,1 to 100 g pheromone/ha, preferably 0,1 to 50 g pheromone/ha.
The invention further relates to a method for controlling undesired insect infestation wherein the microcapsules according to the invention allowed to act on the habitat of the insects in question, or the plants to be protected from the insects in question. The method for controlling undesired insect infestation according to the present invention is usually not applied for therapeutic purposes. The method for controlling undesired insect infestation, wherein the microcapsules are allowed to act on the habitat of the insects in question, or the plants to be protected from the insects in question is usually non-therpeutically. Depending on the type of pheromone, the method can be used for controlling a large number of arthropods, including insects and arachnids. The method for controlling undesired insect infestation is particularly useful for combating **insects,** e.g. from the following orders:
lepidopterans (*Lepidoptera*), for example *Agrotis ypsilon, Agrotis segetum, Alabama argillacea, Anticarsia gemmatalis, Argyresthia conjugella, Autographa gamma, Bupalus piniarius, Cacoecia murinana, Capua reticulana, Cheimatobia brumata, Choristoneura fumiferana, Choristoneura occidentalis, Cirphis unipuncta, Cydia pomonella, Dendrolimus pini, Diaphania nitidalis, Diatraea grandiosella, Earias insulana, Elasmopalpus lignosellus, Eupoecilia ambiguella, Evetria bouliana, Feltia subterranea, Galleria mellonella, Grapholitha funebrana, Grapholitha molesta, Heliothis armigera, Heliothis virescens, Heliothis zea, Hellula undalis, Hibernia defoliaria, Hyphantria cunea, Hyponomeuta malinellus, Keiferia lycopersicella, Lambdina fiscellaria, Laphygma exigua, Leucoptera coffeella, Leucoptera scitella, Lithocolletis blancardella, Lobesia botrana, Loxostege sticticalis, Lymantria dispar, Lymantria monacha, Lyonetia clerkella, Malacosoma neustria, Mamestra brassicae, Orgyia pseudotsugata, Ostrinia nubilalis, Panolis flammea, Pectinophora gossypiella, Peridroma saucia, Phalera bucephala, Phthorimaea operculella, Phyllocnistis citrella, Pieris brassicae, Plathypena scabra, Plutella xylostella, Pseudoplusia includens, Rhyacionia frustrana, Scrobipalpula absoluta, Sitotroga cerealella, Sparganothis pilleriana, Spodoptera frugiperda, Spodoptera littoralis, Spodoptera litura, Thaumatopoea pityocampa, Tortrix viridana, Trichoplusiani* and *Zeiraphera canadensis*;
beetles (*Coleoptera*), for example *Agrilus sinuatus, Agriotes lineatus, Agriotes obscurus, Amphimallus solstitialis, Anisandrus dispar, Anthonomus grandis, Anthonomus pomorum, Aphthona euphoridae, Athous haemorrhoidalis, Atomaria linearis, Blastophagus piniperda, Blitophaga undata, Bruchus rufimanus, Bruchus pisorum, Bruchus lentis, Byctiscus betulae, Cassida nebulosa, Cerotoma trifurcata, Cetonia aurata, Ceuthorrhynchus assimilis, Ceuthorrhynchus napi, Chaetocnema tibialis, Conoderus vespertinus, Crioceris asparagi, Ctenicera ssp., Diabrotica longicornis, Diabrotica semipunctata, Diabrotica 12-punctata Diabrotica speciosa, Diabrotica virgifera, Epilachna varivestis, Epitrix hirtipennis, Eutinobothrus brasiliensis, Hylobius abietis, Hypera brunneipennis, Hypera postica, Ips typographus, Lema bilineata, Lema melanopus, Leptinotarsa decemlineata, Limonius californicus, Lissorhoptrus oryzophilus, Melanotus communis, Meligethes aeneus, Melolontha hippocastani, Melolontha melolontha, Oulema oryzae, Ortiorrhynchus sulcatus, Otiorrhynchus ovatus, Phaedon cochleariae, Phyllobius pyri, Phyllotreta chrysocephala, Phyllophaga sp., Phyllopertha horticola, Phyllotreta nemorum, Phyllotreta striolata, Popillia japonica, Sitona lineatus* and *Sitophilus granaria;*
flies, mosquitoes (*Diptera*), e.g. *Aedes aegypti, Aedes albopictus, Aedes vexans, Anastrepha ludens, Anopheles maculipennis, Anopheles crucians, Anopheles albimanus, Anopheles gambiae, Anopheles freeborni, Anopheles leucosphyrus, Anopheles minimus, Anopheles quadrimaculatus, bactrocera olea, Calliphora vicina, Ceratitis capitata, Chrysomya bezziana, Chrysomya hominivorax, Chrysomya macellaria, Chrysops discalis, Chrysops silacea, Chrysops atlanticus, Cochliomyia hominivorax, Contarinia sorghicola Cordylobia anthropophaga, Culicoides furens, Culex pipiens, Culex nigripalpus, Culex quinquefasciatus, Culex tarsalis, Culiseta inornata, Culiseta melanura, Dacus cucurbitae, Dacus oleae, Dasineura brassicae, Delia antique, Delia coarctata, Delia platura, Delia radicum, Dermatobia hominis, Fannia canicularis, Geomyza Tripunctata, Gasterophilus intestinalis, Glossina morsitans, Glossina palpalis, Glossina fuscipes, Glossina tachinoides, Haematobia irritans, Haplodiplosis equestris, Hippelates spp., Hylemyia platura, Hypoderma lineata, Leptoconops torrens, Liriomyza sativae, Liriomyza trifolii, Lucilia caprina, Lucilia cuprina, Lucilia sericata, Lycoria pectoralis, Mansonia titillanus, Mayetiola destructor, Musca domestica, Muscina stabulans, Oestrus ovis, Opomyza florum, Oscinella frit, Pegomya hysocyami, Phorbia antiqua, Phorbia brassicae, Phorbia coarctata, Phlebotomus argentipes, Psorophora columbiae, Psila rosae, Psorophora discolor, Prosimulium mixtum, Rhagoletis cerasi, Rhagoletis pomonella, Sarcophaga haemorrhoidalis, Sarcophaga sp., Simulium vittatum, Stomoxys calcitrans, Tabanus bovinus, Tabanus atratus, Tabanus lineola, and Tabanus similis, Tipula oleracea,* and *Tipula paludosa;*
cockroaches (*Blattodea*), e.g. *Blattella germanica, Blattella asahinae, Periplaneta americana, Periplaneta japonica, Periplaneta brunnea, Periplaneta fuligginosa, Periplaneta australasiae, and Blatta orientalis*;
ants, bees, wasps, sawflies (*Hymenoptera*)*,* e.g. *Athalia rosae, Atta cephalotes, Atta capiguara, Atta cephalotes, Atta laevigata, Atta robusta, Atta sexdens, Atta texana, Crematogaster spp., Hoplocampa minuta, Hoplocampa testudinea, Monomorium pharaonis, Solenopsis geminata, Solenopsis invicta, Solenopsis richteri, Solenopsis xyloni, Pogonomyrmex barbatus, Pogonomyrmex californicus, Pheidole megacephala, Dasymutilla occidentalis, Bombus spp. Vespula squamosa, Paravespula vulgaris, Paravespula pennsylvanica, Paravespula germanica, Dolichovespula maculata, Vespa crabro, Polistes rubiginosa, Camponotus floridanus,* and *Linepithema humile;*
crickets, grasshoppers, locusts (*Orthoptera*)*,* e.g. *Acheta domestica, Gryllotalpa gryllotalpa, Locusta migratoria, Melanoplus bivittatus, Melanoplus femurrubrum, Melanoplus mexicanus, Melanoplus sanguinipes, Melanoplus spretus, Nomadacris septemfasciata, Schistocerca americana, Schistocerca gregaria, Dociostaurus maroccanus, Tachycines asynamorus, Oedaleus senegalensis, Zonozerus variegatus, Hieroglyphus daganensis, Kraussaria angulifera, Calliptamus italicus, Chortoicetes terminifera,* and *Locustana pardalina.*

Preferred arthropods are *Lepidoptera,* beetles, flies, mosquitoes, cockroaches, ants, bees, wasps, sawflies, crickets, grasshoppers and locusts. In a further embodiment, arthropods are *Lepidoptera,* beetles, cockroaches, ants, bees, wasps, sawflies, crickets, grasshoppers and locusts. More preferably, the arthropods are *Lepidoptera,* such as ***Cydia pomonella*** (codling moth).

The present invention offers various **advantages:** It does not require the handling of highly toxic isocyanate monomers for synthesis of the shell wall; no residual isocyanates may be contained in the final product; the capsules are tight and the pheromone evaporates over a long time; it is possible to adjust the release rate; the expensive pheromone may be diluted with oils without loosing its attractivity; the ethyl isovalerate enhances the attractivity of the pheromone, especially codlemone.
The following examples are meant to illustrate the invention and are not to be viewed in any way as limiting to the scope of the invention.

### Examples

Corn Oil: Standard corn oil, commercially available from Roth as "Maiskeimöl, raffiniert".

### Example 1 - Synthesis of microcapsules

**Water phase:**

| | |
|---|---|
| 27,36 g | water |
| 45,63 g | polyvinyl alcohol (10% by weight in water, degree of hydrolysis 88%) |
| 0,17 g | of a 2.5% by weight aqueous sodium nitrite solution |

**Oil phase:**

| | |
|---|---|
| 35,0 g | water-immiscible solvent / pheromone / attractant (weight ratio see Table 1) |
| 2,58 g | methyl methacrylate |
| 2,58 g | methacrylic acid |
| 1,72 g | butandiol diacrylate |
| 1,72g | PETIA |
| Feed 1: 0,30 g | tert-butyl perpivalate (75%) |
| Feed 2: 0,47 g | 10 wt% aqueous tert-butyl hydroperoxide solution in hydrocarbons |
| Feed 3: 2,51 g | 1 wt% aqueous ascorbic acid solution |

The pheromone was codlemone and the attractant was ethyl 3-methylbutanoate. PETIA is a technical mixture of tri- and tetraacrylate of pentaerythritol. First, the water phase and the oil phase were produced separately with the above composition. The water phase was initially charged at room temperature. Addition of the oil phase was followed by dispersion with a disperser stirrer at 15 000 rpm for 1 minute. The emulsion formed was then transferred to a flask under nitrogen and stirring. Feed 1 was added and the mixture was heated to 70°C while stirring with an anchor stirrer and kept at 70°C for one hour. It was then heated to 85°C and kept at 85°C for two hours. Feed 2 was added to the microcapsule dispersion formed while stirring. Feed 3 was metered in within 50 minutes, in the course of which the mixture was cooled to room temperature within 60 minutes. The microcapsule dispersion formed possessed a solids content and a mean particle size as given in Table 1 (size was measured by Fraunhofer diffraction, volume average).

**Table 1: Composition of the capsule core (CC: Fractionated coconut oil, mixture of caprylic(capric tryiglyceride; PO: paraffinic oil; SO: Soy oil, CO: Corn oil).**

| No. | Pheromone [wt%] | Attractant [wt%] | Solvent | Solvent [wt%] | Solids [wt%]^{b)} | Pheromone mixture [wt%]^{c)} | ER [%]^{d)} | Size [µm]^{e)} |
|---|---|---|---|---|---|---|---|---|
| 1^{a)} | 0 | 100 | -- | 0 | 36,6 | 25,8 | 3,7 | 3,3 |
| 2 | 10 | 90 | -- | 0 | 34,6 | 29,3 | 8,3 | 3,1 |
| 3 | 15 | 85 | -- | 0 | 31,0 | 26,4 | 4,0 | 2,7 |
| 4 | 20 | 80 | -- | 0 | 34,0 | 29,3 | 25,5 | 2,7 |
| 5 | 0,9 | 89,1 | CC | 10 | 36,3 | 26,4 | 1,5 | 1,9 |
| 6 | 4,5 | 85,5 | CC | 10 | 32,4 | 25,8 | 0,7 | 1,9 |
| 7 | 9 | 81 | CC | 10 | 36,6 | 26,3 | 4,9 | 1,9 |
| 8 | 7 | 63 | CC | 30 | 37,7 | 20,0 | 1,5 | 1,8 |
| 9 | 7 | 63 | CC | 30 | 35,2 | 20,0 | 0,9 | 2,2 |
| 10 | 0,9 | 89,1 | PO | 10 | 32,3 | 25,8 | 1,2 | 1,2 |
| 11 | 4,5 | 85,5 | PO | 10 | 30,5 | 25,8 | 1,6 | 1,8 |
| 12 | 9 | 81 | PO | 10 | 36,4 | 25,8 | 3,8 | 2,3 |
| 13 | 7 | 63 | PO | 30 | 36,8 | 20,0 | 1,7 | 1,8 |
| 14 | 7 | 63 | PO | 30 | 34,4 | 20,0 | 0,4 | 2,1 |
| 15 | 13,5 | 76,5 | PO | 10 | 33,7 | 25,8 | 4,2 | 1,9 |
| 16 | 18 | 72 | PO | 10 | 34,9 | 26,3 | 9,1 | 2,2 |
| 17 | 7 | 63 | SO | 30 | 37,0 | 20,0 | 2,1 | 1,8 |
| 18 | 7 | 63 | CO | 30 | 36,9 | 20,0 | 1,3 | 0,8 |

| | | | | | | | | |
|---|---|---|---|---|---|---|---|---|
| a) Comparative, not according to the invention. b) Solid content of dispersion. c) Content of sum of pheromone and attractant in dispersion. d) ER: Evaporation rate at 130 °C. e) Mean particle size. | | | | | | | | |

### Example 2 - Wind tunnel test

A 12 X 12 X 48 inch wind tunnel from Analytical Research Systems was used. The tunnel was placed in an area of the laboratory with the lights off and surrounded by a darkening curtain. The tunnel was illuminated from above with a red party light. The wind tunnel and all associated test materials were cleaned in between chemical treatments. Ten experimental runs with each two insects at a time were conducted per treatment.

Treatment solutions are pipetted into the center of a rubber septa and allowed to vent in a fume hood for 5-6 hours prior to assay initiation, or 24 hours for microencapsulated formulations, respectively. The septa was then suspended in the upwind end of the tunnel by a metal rod that is piercing the charcoal filter and was placed in alignment with the release stage. A wire mesh platform with a piece of filter paper on top was used for release of the insects. Two male codling moth insects were captured in a 20 ml glass scintillation vial 1 hour prior to testing. The insects were tapped onto the filter paper atop the mesh cage and the behavioral responses
- wing fanning- rapid movement of wings,
- take-off-movement of the platform,
- upwind response- movement more than half way up the wind tunnel,
- oriented flight- locking on to the wind plume, and
- source contact- touching the rubber septa
were recorded as well as time to source contact. The observation was complete after 3 minutes or until the insect makes contact with the source.
The mixture of codlemone and ethyl 3-methylbutanoate (also known as ethyl isovalerate) was compared to mixtures of codlemone and methyl salicylate (Table 6), codlemone and amyl acetate (Table 7), codlemone and E,E-farnesol (Table 8), codlemone and pear ester (also known as ethyl (2E,4Z)-decadienoate; Table 9), codlemone and dodecanol (Table 10). The tables summarize the mean percentage of male codling moth behavior.

**Table 6:**

| Entry | Sample | Upwind Response of Males | Oriented Flight of Males | Source Contact of Males |
|---|---|---|---|---|
| 1* | 100 µg codlemone + 10000 µg methyl salicylate | 70 | 50 | 25 |
| 2* | 100000 µg methyl salicylate | 25 | 0 | 0 |
| 3 | 100 µg codlemone + 10000 µg ethyl isovalerate | 85 | 90 | 70 |
| 4* | 100000 µg ethyl isovalerate | 30 | 10 | 0 |
| 5* | 100 µg codlemone | 70 | 60 | 50 |
| 6* | --- | 15 | 0 | 0 |

| | | | | |
|---|---|---|---|---|
| * Comparative example not according to the invention | | | | |

**Table 7:**

| Entry | Sample | Upwind Response of Males | Oriented Flight of Males | Source Contact of Males |
|---|---|---|---|---|
| 1* | 100 µg codlemone + 10000 µg amyl acetate | 50 | 50 | 30 |
| 2* | 100000 µg amyl acetate | 30 | 5 | 0 |
| 3 | 100 µg codlemone + 10000 µg ethyl isovalerate | 85 | 90 | 70 |
| 4* | 100000 µg ethyl isovalerate | 30 | 10 | 0 |
| 5* | 100 µg codlemone | 70 | 60 | 50 |
| 6* | --- | 15 | 0 | 0 |

| | | | | |
|---|---|---|---|---|
| * Comparative example not according to the invention | | | | |

**Table 8:**

| Entry | Sample | Upwind Response of Males | Oriented Flight of Males | Source Contact of Males |
|---|---|---|---|---|
| 1* | 100 µg codlemone + 10000 µg E,E-farnesol | 15 | 0 | 0 |
| 2* | 100000 µg E,E-farnesol | 25 | 0 | 0 |
| 3 | 100 µg codlemone + 10000 µg ethyl isovalerate | 85 | 90 | 70 |
| 4* | 100000 µg ethyl isovalerate | 30 | 10 | 0 |
| 5* | 100 µg codlemone | 70 | 60 | 50 |
| 6* | --- | 15 | 0 | 0 |

| | | | | |
|---|---|---|---|---|
| * Comparative example not according to the invention | | | | |

**Table 9:**

| Entry | Sample | Upwind Response of Males | Oriented Flight of Males | Source Contact of Males |
|---|---|---|---|---|
| 1* | 100 µg codlemone + 10000 µg pear ester | 60 | 40 | 25 |
| 2* | 100000 µg pear ester | 27 | 0 | 0 |
| 3 | 100 µg codlemone + 10000 µg ethyl isovalerate | 85 | 90 | 70 |
| 4* | 100000 µg ethyl isovalerate | 30 | 10 | 0 |
| 5* | 100 µg codlemone | 70 | 60 | 50 |
| 6* | --- | 15 | 0 | 0 |

| | | | | |
|---|---|---|---|---|
| * Comparative example not according to the invention | | | | |

**Table 10:**

| Entry | Sample | Upwind Response of Males | Oriented Flight of Males | Source Contact of Males |
|---|---|---|---|---|
| 1* | 100 µg codlemone + 10000 µg dodecanol | 75 | 65 | 55 |
| 2* | 100000 µg dodecanol | 20 | 0 | 0 |
| 3 | 100 µg codlemone + 10000 µg ethyl isovalerate | 85 | 90 | 70 |
| 4* | 100000 µg ethyl isovalerate | 30 | 10 | 0 |
| 5* | 100 µg codlemone | 70 | 60 | 50 |
| 6* | --- | 15 | 0 | 0 |

| | | | | |
|---|---|---|---|---|
| * Comparative example not according to the invention | | | | |

## Claims

1. A composition for controlling undesired insect infestation comprising a pheromone and ethyl 3-methylbutanoate, wherein the pheromone comprises (E,E)-8,10-dodecadien-1-ol.

2. The composition of claim 1, wherein the weight ratio of (E,E)-8,10-dodecadien-1-ol to ethyl 3-methylbutanoate is in the range from 1 : 1 to 1 : 100,000.

3. The composition of claim 1 or 2, wherein the weight ratio of (E,E)-8,10-dodecadien-1-ol to ethyl 3-methylbutanoate is in the range from 1 : 30 to 1 : 5,000.

4. Microcapsules comprising a microcapsule core, which contains the composition as defined in claim 1, and a capsule shell, which contains in polymerized form
30 to 90% by weight of one or more C₁-C₂₄ alkyl esters of acrylic acid and/or methacrylic acid, acrylic acid, methacrylic acid and/or maleic acid (monomers I);
10 to 70% by weight of one or more difunctional and/or polyfunctional monomers (monomers II);
0 to 40% by weight of one or more other monomers (monomer III);
In each case based on the total weight of the monomers.

5. The microcapsules of claim 4, wherein the capsule core contains an organic solvent with a water-solubility at 20 °C is up to 10 g/l.

6. The microcapsules of claim 5, wherein the organic solvent is a fatty acid glyceride.

7. The microcapsules according to any of claims 4 to 6, wherein the monomers II are selected from divinyl- and polyvinyl monomers.

8. The microcapsules according to any of claims 4 to 7, wherein the monomers II are selected from propanediol, 1,4-butanediol, pentanediol, and hexanediol di(meth)acrylates; and trimethylolpropane triacrylate and trimethacrylate, pentaerythritol triallyl ether, pentaerythritol tetraallyl ether, pentaerythritol triacrylate, and pentaerythritol tetraacrylate, and also their technical mixtures.

9. The composition as defined in any of claims 1 to 3, or the microcapsules as defined in any of claims 4 to 8, in form of an agrochemical composition selected from suspensions, emulsifyable concentrates, emulsions, pastes, pastilles, wettable powders, dusts, granules, which can be water-soluble or wettable, and gel formulations.

10. Process for the preparation of the composition as defined in claim 1 to 3, wherein the ethyl 3-methylbutanoate and the (E,E)-8,10-dodecadien-1-ol are mixed.

11. Process for the preparation of the microcapsules as defined in any of claims 4 to 8, which comprises preparing an oil-in-water emulsion from monomers, free-radical initiator, protective colloid, the pheromone comprising (E,E)-8,10-dodecadien-1-ol, and attractant which is ethyl 3-methylbutanoate, and triggering the polymerization of the monomers by heating.

12. Method for controlling undesired insect infestation wherein the composition as defined in any of claims 1 to 3, and 9, or the microcapsules as defined in any of claims 4 to 8, and 9, is/are allowed to act on the habitat of the insects in question, or the plants to be protected from the insects in question.

13. The method of claim 12 for controlling codling moths.

## Patentansprüche

1. Zusammensetzung zum Bekämpfen von unerwünschten Insektenbefall, umfassend ein Pheromon und Ethyl-3-methylbutanoat, wobei das Pheromon (E,E)-8,10-Dodecadien-1-ol umfasst.

2. Zusammensetzung nach Anspruch 1, wobei das Gewichtsverhältnis von (E,E)-8,10-Dodecadien-1-ol zu Ethyl-3-methylbutanoat im Bereich von 1:1 bis 1:100 000 liegt.

3. Zusammensetzung nach Anspruch 1 oder 2, wobei das Gewichtsverhältnis von (E,E)-8,10-Dodecadien-1-ol zu Ethyl-3-methylbutanoat im Bereich von 1:30 bis 1:5000 liegt.

4. Mikrokapseln, umfassend einen Mikrokapselkern, der die wie in Anspruch 1 definierte Zusammensetzung enthält, und eine Kapselhülle, die in polymerisierter Form
30 bis 90 Gew.-% an einem oder mehreren C₁-C₂₄-Alkylestern der Acrylsäure und/oder Methacrylsäure, Acrylsäure, Methacrylsäure und/oder Maleinsäure (Monomere I) ;
10 bis 70 Gew.-% an einem oder mehreren difunktionalen und/oder polyfunktionellen Monomeren (Monomere II);
0 bis 40 Gew.-% an einem oder mehreren anderen Monomeren (Monomer III),
jeweils in Bezug auf das Gesamtgewicht der Monomere, enthält.

5. Mikrokapseln nach Anspruch 4, wobei der Kapselkern ein organisches Lösungsmittel mit einer Wasserlöslichkeit bei 20°C von bis zu 10 g/l enthält.

6. Mikrokapseln nach Anspruch 5, wobei es sich bei dem organischen Lösungsmittel um ein Fettsäureglycerid handelt.

7. Mikrokapseln nach einem der Ansprüche 4 bis 6, wobei die Monomere II aus Divinyl- und Polyvinyl-monomeren ausgewählt sind.

8. Mikrokapseln nach einem der Ansprüche 4 bis 7, wobei die Monomere II aus Propandiol-, 1,4-Butandiol-, Pentandiol- und Hexandiol-di(meth)acrylaten; und Trimethylolpropantriacrylat und Trimethacrylat, Pentaerythrittriallylether, Pentaerythrittetraallylether, Pentaerythrittriacrylat und Pentaerythrittetraacrylat sowie ihren technischen Mischungen ausgewählt sind.

9. Zusammensetzung wie in einem der Ansprüche 1 bis 3 definiert, oder Mikrokapseln wie in einem der Ansprüche 4 bis 8 definiert, in Form einer agrarchemischen Zusammensetzung, ausgewählt aus Suspensionen, Emulsionskonzentraten, Emulsionen, Pasten, Pastillen, Spritzpulvern, Stäuben, Granulaten, die wasserlöslich oder netzbar sein können, und Gelformulierungen.

10. Verfahren zur Herstellung der Zusammensetzung wie in Anspruch 1 bis 3 definiert, wobei das Ethyl-3-methylbutanoat und das (E,E)-8,10-Dodecandien-1-ol vermischt werden.

11. Verfahren zur Herstellung der Mikrokapseln wie in einem der Ansprüche 4 bis 8 definiert, bei dem man aus Monomeren, Radikalstarter, Schutzkolloid, dem Pheromon, das (E,E)-8,10-Dodecadien-l-ol umfasst, und dem Attractant, bei dem es sich um Ethyl-3-methylbutanoat handelt, eine Öl-in-Wasser-Emulsion herstellt und die Polymerisation der Monomere durch Erhitzen initiiert.

12. Verfahren zur Bekämpfung von unerwünschtem Insektenbefall, wobei man die Zusammensetzung wie in einem der Ansprüche 1 bis 3 und 9 definiert, oder die Mikrokapseln wie in einem der Ansprüche 4 bis 8 und 9 definiert, auf den Lebensraum der jeweiligen Insekten oder auf die von den jeweiligen Insekten zu schützenden Pflanzen einwirken lässt.

13. Verfahren nach Anspruch 12 für die Bekämpfung des Apfelwicklers.

## Revendications

1. Composition destinée à contrôler une infestation non désirée par des insectes, comprenant une phéromone et du 3-méthylbutanoate d'éthyle, dans laquelle la phéromone comprend du (E,E)-8,10-dodécadién-1-ol.

2. Composition selon la revendication 1, dans laquelle le rapport pondéral du (E,E)-8,10-dodécadién-1-ol au 3-méthylbutanoate d'éthyle se trouve dans la plage allant de 1:1 à 1:100 000.

3. Composition selon la revendication 1 ou 2, dans laquelle le rapport pondéral du (E,E)-8,10-dodécadién-1-ol au 3-méthylbutanoate d'éthyle se trouve dans la plage allant de 1:30 à 1:5 000.

4. Microcapsules comprenant un coeur de microcapsule, qui contient la composition telle que définie selon la revendication 1, et une enveloppe de capsule, qui contient sous forme polymérisée
de 30 à 90% en poids d'un ou plusieurs C₁-C₂₄alkylesters d'acide acrylique et/ou d'acide méthacrylique, d'acide acrylique, d'acide méthacrylique et/ou d'acide maléique (monomères I) ;
de 10 à 70% en poids d'un ou plusieurs monomères difonctionnels et/ou polyfonctionnels (monomères II) ; de 0 à 40% en poids d'un ou plusieurs autres monomères (monomère III) ;
dans chaque cas sur la base du poids total des monomères.

5. Microcapsules selon la revendication 4, dans lesquelles le coeur de capsule contient un solvant organique ayant une solubilité dans l'eau à 20°C allant jusqu'à 10 g/l.

6. Microcapsules selon la revendication 5, dans lesquelles le solvant organique est un glycéride d'acide gras.

7. Microcapsules selon l'une quelconque des revendications 4 à 6, dans lesquelles les monomères II sont choisis parmi les monomères de divinyle et polyvinyle.

8. Microcapsules selon l'une quelconque des revendications 4 à 7, dans lesquelles les monomères II sont choisis parmi les di(méth)acrylates de propanediol, de 1,4-butanediol, de pentanediol et d'hexanediol ; et le triacrylate et triméthacrylate de triméthylolpropane, le triallyléther de pentaérythritol, le tétraallyléther de pentaérythritol, le triacrylate de pentaérythritol, et le tétraacrylate de pentaérythritol, ainsi que leurs mélanges techniques.

9. Composition telle que définie selon l'une quelconque des revendications 1 à 3, ou microcapsules telles que définies selon l'une quelconque des revendications 4 à 8, sous la forme d'une composition agrochimique choisie parmi les suspensions, les concentrés émulsifiables, les émulsions, les pâtes, les pastilles, les poudres mouillables, les poussières, les granulés, qui peuvent être hydrosolubles ou mouillables, et les formulations de gel.

10. Procédé de préparation de la composition telle que définie selon les revendications 1 à 3, dans lequel le 3-méthylbutanoate d'éthyle et le (E,E)-8,10-dodécadién-1-ol sont mélangés.

11. Procédé de préparation des microcapsules telles que définies selon l'une quelconque des revendications 4 à 8, comprenant la préparation d'une émulsion huile-dans-eau à partir de monomères, d'un initiateur radicalaire, d'un colloïde protecteur, de la phéromone comprenant du (E,E)-8,10-dodécadién-1-ol, et de l'attractif étant le 3-méthylbutanoate d'éthyle, et le déclenchement de la polymérisation des monomères par chauffage.

12. Méthode de contrôle d'une infestation non désirée par des insectes, dans laquelle on permet à la composition telle que définie selon l'une quelconque des revendications 1 à 3, et 9, ou aux microcapsules telles que définies selon l'une quelconque des revendications 4 à 8, et 9, d'agir sur l'habitat des insectes en question, ou les plantes devant être protégées contre les insectes en question.

13. Méthode selon la revendication 12, pour le contrôle de la pyrale de la pomme.
